# EUROPEAN PATENT SPECIFICATION

(11) **EP 4 432 184 B1**
(45) Date of publication and mention of the grant of the patent: **18.11.2026**
(21) Application number: 23161491.8
(22) Date of filing: 13.03.2023
(51) Int. Cl.: G06Q 10/0832, A47G 29/14

(54) **CONTROLLING ACCESS TO A PARCEL BOX**
STEUERUNG DES ZUGANGS ZU EINER PAKETBOX
CONTRÔLE D'ACCÈS À UNE BOÎTE DE COLIS

(43) Date of publication of application: 18.09.2024
(73) Proprietor: Custo Box BV, 9000 Gent (BE)
(72) Inventor: Delplanque, Francis, 9800 Deinze (BE); Legroe, Nick, 9990 Maldegem (BE); Giebens, Kris, 2018 Antwerpen (BE); Verlinden, Bert, 2018 Antwerpen (BE); Vanreusel, Kobe, 2018 Antwerpen (BE); Demeulenaere, Andries, 2018 Antwerpen (BE); Merckx, Sebastiaan, 2018 Antwerpen (BE)
(74) Representative: Ipsilon Belgium

(56) References cited:
- US-A1- 2017 286 905
- US-A1- 2020 151 982

## Description

### Field of the Invention

The present invention generally relates to receiving a parcel in absence of a recipient and to sending a parcel in absence of a sender.

### Background of the Invention

In absence of a recipient, a parcel may be delivered by leaving it outside of a residence, with neighbours, or with a pick-up point. This can result in undue burden for the recipient to retrieve the parcel. Additionally, the parcel can be damaged or even lost. This can also cause undue burden for the parcel carrier if another delivery attempt has to be undertaken, and damaged or lost parcels have to be replaced. Similarly, sending or returning a parcel requires the sender to be present when a parcel carrier picks up the parcel, or requires bringing the parcel to a dedicated pick-up point. Delivering and sending parcels can thus be associated with substantial logistical effort and cost. It can thus be desirable to enable secure delivering and sending of parcels in absence of the recipient or sender without undue burden.

A parcel box, typically located near a residence or office, allows leaving parcels securely for the recipient in his absence. Some parcel boxes secure already delivered parcels within the parcel box by making the parcels unreachable once delivered, e.g. by a specific shape or mechanism of the storage compartment. This has the problem that parcels cannot be send from the parcel box, as the parcels within the box are unreachable for pick-up, e.g. by a parcel carrier. Other parcel boxes secure parcels within the parcel box by means of a number lock, or by remotely granting access to the parcel box upon request, e.g. by means of a videophone and an app. This has the problem that particular information or instructions have to be provided to a parcel carrier, e.g. an access code for the number lock, or that an action is required by the recipient to grant access.

A parcel locker, typically located at a public high-traffic location, comprises a plurality of secure storage compartments. These storage compartments can typically be used by different unrelated recipients, i.e. the storage compartments are shared and available to whoever desires to use them. A parcel carrier can typically deliver a parcel in any of the storage compartments within a parcel locker, whereafter only the intended recipient of the parcel can unlock the storage compartment wherein the parcel is placed. This has the problem that the recipient has to travel to the parcel locker to retrieve the parcel.

US 2017/286905 A1 discloses a parcel box comprising a temperature control system that selectively controls a temperature inside a protected cavity configured to receive a parcel. US 2020/151982 A1 discloses systems and methods for securely delivering, transferring ownership, storing, accessing and receiving or returning packages.

### Summary of the Invention

It is an object of the present invention, amongst others, to solve or alleviate the above identified problems and challenges by improving the delivering and sending of parcels in absence of a recipient or sender.

According to a first aspect, this object is achieved by a computer-implemented method for controlling access to a parcel box comprising a secured storage compartment for storing parcels, and further comprising a scanner for scanning machine-readable labels. The computer-implemented method comprises obtaining, from the parcel box, a parcel identifier further obtained by scanning a machine-readable label associated with a parcel by means of the scanner. The computer-implemented method further comprising querying one or more third party services for a location of the parcel associated with the parcel identifier; and, if the location of the parcel matches a location of the parcel box, granting access to the secured storage compartment of the parcel box.

The parcel box is associated with a particular property, e.g. a residence or an office, at the location of the parcel box. The parcel box is thus associated with a particular individual or a group of individuals, i.e. the owner or owners of the parcel box, that have their place of residence or place of business at the location of the parcel box. The location of the parcel box may, for example, be provisioned during installation of the parcel box. A parcel may be any object or collection of objects that are to be transferred from a third party to an owner of the parcel box, or that are to be transferred from the owner of the parcel box to a third party, i.e. parcel delivery or parcel pick-up respectively. Such a third party may for example be, amongst others, a parcel carrier, a courier, a relative, a friend, or a neighbour.

A parcel identifier is obtained by scanning a machine-readable label, e.g. a barcode or a QR code. The machine-readable label may, for example, be attached to a parcel, displayed on a screen of a computing device, or printed on a sheet of paper. The parcel identifier may, for example, be a tracking number, or any unique sequence of characters that identifies the parcel. The obtained parcel identifier is used to query one or more third party services for a location of the parcel associated with the parcel identifier. The one or more third party services may be any software and/or hardware that allows obtaining information on a parcel based on a parcel identifier. The one or more third party services may, for example, be respective APIs for tracking parcels shipped by respective couriers, or a centralized API for tracking parcels shipped by any of a plurality of couriers. The query returns the location of the parcel. The location of the parcel may be indicative for a live location of the parcel, a last known location of the parcel, a delivery location, or a pick-up location.

As such, comparing the location of the parcel with the location of the parcel box after scanning the machine-readable label allows determining whether access to the secured storage compartment is authorized. This allows receiving and sending parcels in a secure and reliable way in absence of the owner of the parcel box, i.e. the recipient or sender. It is an advantage that a parcel can be send and delivered without providing particular information or instructions to a parcel carrier, e.g. when placing an online order or returning an ordered item. It is a further advantage that the computer-implemented method can be easily incorporated into existing delivery methods and pick-up methods of parcel carriers and couriers.

According to an embodiment, the location of the parcel may comprise a delivery location indicative for a location where the parcel is to be delivered, or a pick-up location indicative for a location where the parcel is to be picked up from.

By the delivery location, a parcel to be delivered to the parcel box can be received securely in absence of the recipient by granting access to the secured storage compartment of the parcel box. By the pick-up location, a parcel to be send from the parcel box can be picked-up securely in absence of the sender by granting access to the secured storage compartment of the parcel box. It is a further advantage that the computer-implemented method enables both receiving and sending of parcels.

According to an embodiment, the computer-implemented method may further comprise granting access to the secured storage compartment of the parcel box if the location of the parcel is within a configurable threshold distance from the location of the parcel box.

The configurable threshold distance thus allows setting a safety margin or a margin of error for granting access to the secured storage compartment. This can avoid that access to the secured storage compartment is refused if the location of the parcel box or the location of the parcel comprises a relatively small error, e.g. a mistake in the house number of an address. This has the further advantage that the computer-implemented method is more robust and avoids undue burden to receive or send parcels due to a failed delivery or pick-up.

According to an embodiment, the location of the parcel, and the location of the parcel box may be characterized by respective addresses and/or respective spatial coordinates.

An address may characterize a geospatial location by means of a street name, a house number, a postal code, and/or a country. Spatial coordinates may characterize a geospatial location according to any coordinate system, e.g. x and y coordinates representing longitude and latitude on the surface of the Earth respectively. Spatial coordinates allow more accurate matching of the location of the parcel and the location of the parcel box, and allow using a finer scale, i.e. smaller increments, for setting the configurable threshold distance compared to addresses.

According to an embodiment, the computer-implemented method may further comprise geocoding at least one respective address to spatial coordinates.

In other words, an address associated with the location of the parcel and/or the location of the parcel box may be converted to spatial coordinates. This allows obtaining the spatial coordinates of the location of the parcel box and/or the location of the parcel if only the respective address is known or provided. Alternatively or complementary, the computer-implemented method may further comprise reverse geocoding at least one set of spatial coordinates to an address. This allows obtaining an address of the location of the parcel box and/or the location of the parcel if only the respective spatial coordinates are known or provided.

According to an embodiment, the computer-implemented method may further comprise determining the location of the parcel box by means of a global navigation satellite system.

This may be achieved by determining the geospatial location of a mobile computing device used to set-up or configure the parcel box during installation, e.g. by prompting a user to scan a QR code on the parcel box during installation. Alternatively or complementary, this may be achieved by determining the location of the parcel box by means of a communication module within the parcel box, e.g. an LTE communication module configured to provide the location of the parcel box.

According to an embodiment, the querying may comprise querying a plurality of third party services for a location of the parcel at substantially the same time.

Data may thus be requested and/or received from a plurality of third party services substantially in parallel. This allows obtaining the location of the parcel faster, which has the further advantage that a delay between scanning a machine-readable label at the parcel box and access to the parcel box is limited.

According to an embodiment, the querying may further comprise obtaining, from the one or more third party services, tracking information associated with the parcel identifier; and determining the location of the parcel from the tracking information.

A query response of one or more third party services may thus include tracking information or tracking details associated with the parcel identifier, i.e. associated with the parcel. Tracking information may include, amongst others, a tracking number, a name of a sender, a name of a recipient, an address of the sender, an address of the recipient, a sender reference, a courier reference, and a time in transit.

According to an embodiment, obtaining the parcel identifier from the parcel box comprises receiving a message structured according to a message queuing telemetry transport, MQTT, protocol or a hypertext transfer protocol, HTTP.

According to an embodiment, the computer-implemented method may further comprise adding a parcel identifier associated with an expected parcel to a list of authorized parcel identifiers; and granting access to the secured storage compartment of the parcel box if the obtained parcel identifier matches a parcel identifier on the list of authorized parcel identifiers.

The expected parcel may be a parcel that is expected to be delivered at the parcel box, or a parcel that is expected to be picked-up from the parcel box. The list of authorized parcel identifiers may be stored locally, e.g. in a local memory of the parcel box, and/or remotely, e.g. in cloud storage. This further allows granting access to the secured storage compartment based on parcel identifiers that are not generated or managed by a courier, e.g. based on a QR code generated by the owner of the parcel box. This has the further advantage that the parcel box can be used to securely transfer objects, e.g. a physical key of a residence or blood samples, between authorized users of the parcel box.

According to an embodiment, adding the parcel identifier to a list of authorized parcel identifiers may comprise receiving a tracking email that includes the parcel identifier; and retrieving the parcel identifier from the received tracking email by means of natural language processing.

A tracking email is typically received by the intended recipient of a parcel when the parcel is provided to a parcel carrier or courier by the sender. A tracking email may also be received by a sender of a parcel when offering the parcel to a parcel carrier. This tracking email may then, for example, be forwarded to an email address associated with the parcel box. Alternatively, the tracking email may directly be send to an email address associated with the parcel box. Hereafter, a natural language processing method may identify the parcel identifier from the tracking email. Natural language processing may refer to any computer program or software that allows to process and analyse natural language data by a computing device.

According to an embodiment, adding the parcel identifier to a list of authorized parcel identifiers comprises receiving the parcel identifier from a software application.

According to an embodiment, the computer-implemented method may further comprise exchanging data indicative for the controlling of access to the parcel box with a home automation system.

A home automation system, also referred to as building management system, allows automatic centralized control of subsystems within a home or building such as, for example, an electrical system, lighting, shading, access control, security systems, and heating ventilation and air conditioning, HVAC, systems. The data may be exchanged between the home automation system and the parcel box, and/or between the home automation system and an authentication server configured to control access to the parcel box. This allows integration of the parcel box within a smart home.

According to a second aspect, the invention relates to a method for receiving a parcel at a parcel box comprising a secured storage compartment for storing parcels, and further comprising a scanner for scanning machine-readable labels. The method comprises, by the scanner, scanning a machine-readable label associated with a parcel to obtain a parcel identifier. The method further comprises, by an authentication server, controlling access to the parcel box according to the first aspect. The method further comprises, if access is granted by the authentication server, unlocking an electronic lock to provide access to the secured storage compartment; and receiving the parcel by delivering the parcel within the secured storage compartment.

According to a third aspect, the invention relates to a method for sending a parcel from a parcel box comprising a secured storage compartment for storing parcels, and further comprising a scanner for scanning machine-readable labels. The method comprises, by the scanner, scanning a machine-readable label associated with a parcel to obtain a parcel identifier. The method further comprises, by an authentication server, controlling access to the parcel box according to the first aspect. The method further comprises, if access is granted by the authentication server, unlocking an electronic lock to provide access to the secured storage compartment; and sending the parcel by removing the parcel from the secured storage compartment.

According to a fourth aspect, the invention relates to a parcel box for receiving and sending parcels. The parcel box comprises i) a secured storage compartment configured to store parcels; ii) a scanner configured to scan a machine-readable label associated with a parcel to obtain a parcel identifier; iii) a control unit configured to provide the parcel identifier to an authentication server configured to control access to the parcel box according to the first aspect; and iv) an electronic lock configured to provide access to the secured storage compartment if access is granted by the authentication server.

According to a fifth aspect, the invention relates to a data processing system configured to perform the computer-implemented method according to the first aspect.

According to a sixth aspect, the invention relates to a computer program comprising instructions which, when the computer program is executed by a computer, cause the computer to perform the computer-implemented method according to the first aspect.

According to a seventh aspect, the invention relates to a computer-readable medium comprising instructions which, when executed by a computer, cause the computer to perform the computer-implemented method according to the first aspect.

### Brief Description of the Drawings

Fig. 1 shows steps according to a computer-implemented method for controlling access to a parcel box according to embodiments;
Fig. 2 shows the interactions of a parcel box and an authentication server for controlling access to the parcel box according to embodiments;
Fig. 3 shows a sequence diagram illustrating the digital communication between devices for controlling access to a parcel box according to embodiments;
Fig. 4 shows further steps according to a computer-implemented method for controlling access to a parcel box according to embodiments;
Fig. 5 shows steps of a method for receiving a parcel at a parcel box and for sending a parcel from the parcel box according to example aspects of the disclosure; and
Fig. 6 shows an example embodiment of a suitable computing system for performing steps according to example aspects of the disclosure.

### Detailed Description of Embodiment(s)

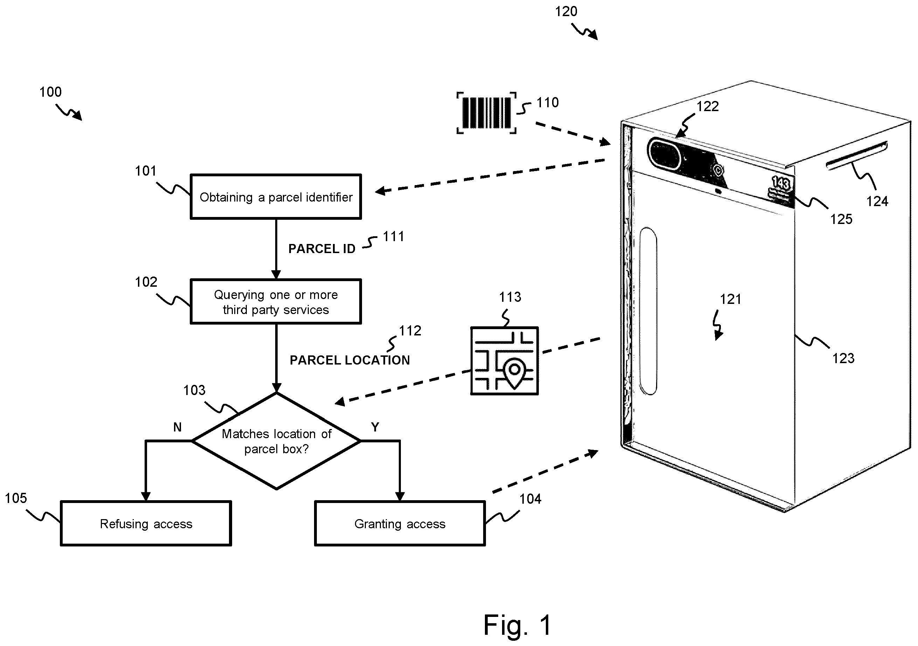

Fig. 1 shows steps 100 according to a computer-implemented method for controlling access to a parcel box 120. The parcel box 120 comprises a secured storage compartment 121 and a scanner 122. The secured storage compartment 121 may be a substantial portion of the volume of the parcel box 120 that is accessible by means of a secured door 123. Door 123 is secured by means of an electronic lock. Parcel box 120 may further comprise a slot 124 for receiving mail, e.g. letters and advertisement. The slot 124 may provide access to a mail storage compartment that is separate from the secured storage compartment 121. In other words, the mail storage compartment may be a different portion of the volume of the parcel box 120 than the secured storage compartment 121. The parcel box 120 may further comprise a display 125. The display 125 may be configured to show an address associated with the parcel box 120, i.e. the location of the parcel box 113. The parcel box 120 is thus associated with a particular property, e.g. a residence or office, at the location of the parcel box 113. The display 125 may further be configured to display messages or notifications to a user of the parcel box, e.g. prompting an approaching person to present a machine-readable label 110 in front of scanner 122.

The parcel box 120 is further associated with an individual, i.e. the owner of the parcel box 120, that has a place of residence or a place of business at the location of the parcel box 113. Display 125 may further be configured to show the name of the owner of the parcel box 120. Alternatively, parcel box 120 is associated with a group of individuals, i.e. the owners of the parcel box, that share a place of residence or a place of business located at the particular property associated with the parcel box. The parcel box 120 may be placed on a particular property such that the parcel box is accessible from a public road, i.e. similar to a mail box.

The location of the parcel box 113 is a geospatial location that may be characterized by an address and/or spatial coordinates. An address may characterize the location of the parcel box 113 by means of a street name, a house number, a postal code, and/or a country. The spatial coordinates may characterize the location of the parcel box 113 according to any coordinate system, e.g. x and y coordinates representing longitude and latitude on the surface of the Earth respectively. Spatial coordinates can be more accurate compared to an address. The location of the parcel box 113 may be stored in a local memory included in the parcel box 120 and/or stored in a remote memory, e.g. in an authentication server or cloud storage.

The location of the parcel box 113 may be provisioned during installation of the parcel box 120, e.g. by registering the address of the particular property where the parcel box is placed in a software application. Alternatively or complementary, the location of the parcel box 113 may be determined by means of a global navigation satellite system. This may be achieved by determining the geospatial location of a mobile computing device used to set-up or configure the parcel box 120 during installation. For example, the owner of the parcel box or a technician may be prompted to scan a QR code on the parcel box 120 during the installation procedure by means of a smartphone. Upon scanning the QR code by the smartphone, the geospatial location of the smartphone can be determined by means of a communication module within the smartphone. As such, the location of the parcel box 113 can be obtained. Alternatively or complementary, determining the location of the parcel box 113 may be achieved by means of a communication module included in the parcel box 120, e.g. an LTE communication module.

The secured storage compartment 121 is configured to store one or more parcels. A parcel may be any object or collection of objects that are to be transferred from a third party to the owner or owners of the parcel box 120, or that are to be transferred from the owner of the parcel box to a third party. Such a third party may for example be, amongst others, a parcel carrier, a courier, a relative, a friend, or a neighbour. A parcel may for example be, amongst others, a cardboard box, a physical key, blood samples, samples for medical testing, or food items. For example, parcel box 120 may be used by a house owner, i.e. the owner of the parcel box 120, to securely transfer a housekey to a guest or a cleaning person in his absence. In another example, the parcel box 120 may be used by a medical doctor, i.e. the owner of the parcel box, to securely transfer blood samples for medical testing to an employee of a medical laboratory. In another example, the parcel box 120 may be used by a parcel carrier to securely transfer an ordered item to the owner of the parcel box.

The scanner 122 is configured to scan a machine-readable label 110, e.g. a barcode or a QR code, associated with a parcel. The scanner 122 may, for example, be a barcode reader, an optical scanner, a QR scanner, an optical camera, or any other device known to the skilled person for scanning machine-readable labels 110. The machine-readable label 110 may, for example, be attached to a parcel, displayed on a screen, or printed on a sheet of paper. Scanning the machine-readable label 110 allows obtaining a parcel identifier 111 by the parcel box 120, e.g. by a control unit or processor (not shown in Fig. 1) included in the parcel box 120. The parcel identifier 111 may, for example, be a tracking number, or any unique sequence of characters that identifies a parcel.

In a first step 101 of the computer-implemented method, the parcel identifier 111 is obtained from the parcel box 120. To this end, parcel box 120 may comprise a control unit and/or communication module (not shown in Fig. 1) configured to provide or send the parcel identifier 111 to an authentication server (not shown in Fig. 1) configured to perform steps 100 of the computer-implemented method.

In a next step 102, one or more third party services are queried for a location of the parcel associated with parcel identifier 111. In other words, a request may be send to one or more third party services to return the location of the scanned parcel 112. The third party services may be any software and/or hardware that allows obtaining information on a parcel based on a parcel identifier. For example, the third party services may be respective APIs for tracking parcels shipped by respective couriers, a centralized API for tracking parcels shipped by any of a plurality of couriers, or an API for interfacing with a database comprising parcel information. Querying the third party services in step 102 thus returns the location of the parcel 112. It will be apparent that, if a plurality of APIs associated with different couriers are queried, only the API of the courier that is handling the parcel associated with the parcel identifier can return the location of the parcel 112.

The location of the parcel 112 may comprise a delivery location indicative for a location where the parcel is to be delivered, or a pick-up location indicative for a location where the parcel is to be picked-up from. Alternatively or complementary, the location of the parcel 112 may comprise a live location of the parcel, or a last known location of the parcel. The location of the parcel 112 may be characterized by an address and/or by spatial coordinates.

In a following step 103, the location of the parcel box 113 is compared with the location of the parcel 112. The location of the parcel box 113 can be retrieved from a local memory included in the parcel box 120 or from a remote memory, e.g. a memory in the authentication server or cloud storage. If these locations 112, 113 do not substantially match, access to the secured storage compartment 121 is refused in step 105. If the location of the parcel box 113 and the location of the parcel 112 do substantially match, access is granted to the secured storage compartment 121 of the parcel box 120 in step 104. In doing so, scanning a machine-readable label 110 associated with a parcel that is to be delivered at the location of the parcel box 113, or is to be picked-up from the location of the parcel box 113, results in obtaining access to the secured storage compartment 121.

This allows receiving and sending parcels in a secure and reliable way in absence of the owner of the parcel box 120, i.e. the recipient or the sender. It is an advantage that a parcel can be send and delivered without providing any particular information or instructions to a parcel carrier, e.g. when placing an online order or returning an ordered item. It is a further advantage that the computer-implemented method can be easily incorporated into existing delivery methods and pick-up methods of parcel carriers and couriers.

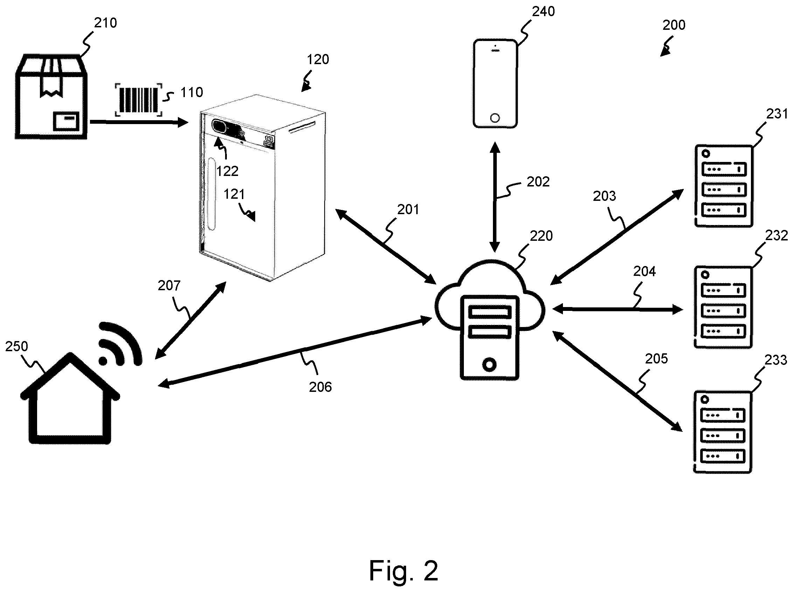

Fig. 2 shows interactions of parcel box 120 and authentication server 220 for controlling access to the parcel box 120 according to embodiments. A parcel carrier may scan a machine-readable label 110 associated with a parcel 120 by means of scanner 122. In doing so, parcel box 120 may obtain a parcel identifier associated with the parcel 120, e.g. a tracking number. The obtained parcel identifier may then be exchanged 201 with the authentication server 220. The parcel identifier may be included in a message structured according to a message queuing telemetry transport, MQTT, protocol or a hypertext transfer protocol, HTTP. Authentication server 220 may be configured to control access to the parcel box 120 by performing steps 100 in Fig. 1 as described above. Authentication server 220 may be a cloud server that can be accessed remotely over a network, e.g. Amazon Web Services, AWS, Azure, or Google Cloud.

Authentication server 220 queries 203, 204, 205 one or more third party services 231, 232, 233 for a location of the parcel 210 associated with the parcel identifier. For example, third party service 231 may be an API for tracking parcels shipped by a first courier, third party service 232 may be an API for tracking parcels shipped by a second courier, and third party service 233 may be an API for tracking parcels shipped by a third courier. In response to the query, the third party service associated with the courier responsible for handling parcel 210, e.g. 231, may return the location of the parcel. It will be apparent that other third party services associated with couriers not responsible for handling parcel 210, e.g. 232, 233, may not return the location of the parcel, as the scanned parcel identifier may be unknown to these couriers. The third party services 231, 232, 233 may be queried 203, 204, 205 substantially at the same time, i.e. in parallel, by the authentication server 220. This allows obtaining the location of the parcel faster. This has the further advantage that a delay between scanning the machine-readable label 110 at the parcel box 120 and being granted access to the parcel box is limited.

Authentication server 220 may be configured to grant access to the parcel box 120 if the location of the parcel matches the location of the parcel box, e.g. by sending 201 an authorization command to parcel box 120. Authentication server 220 may further be configured to exchange 206 data indicative for the access control with a home automation system 250. Home automation system 250, also referred to as a building management system, allows centralized control of subsystems within a home or building such as, for example, an electrical system, lighting, shading, access control, security systems, and heating ventilation and air conditioning, HVAC, systems. In other words, home automation system 250 may be configured to control subsystems within the residence or office of the owner of the parcel box 120. This allows integration of the parcel box within a smart home. For example, a notification can be send 206 to the home automation system 250 when a parcel is delivered in parcel box 120, which subsequently can be communicated to the owner of the parcel box 120 through a subsystem controlled by the home automation system 250, e.g. a display inside the house. In another example, a security system controlled by home automation system 250 may be activated when access to the parcel box 120 is refused by authentication server 220. Alternatively or complementary, parcel box 120 may also be configured to exchange 250 data with the home automation system 250.

Authentication server 220 may further be configured to exchange 202 data with a computing device 240 for managing the parcel box 120. Computing device 240 may, for example, be a smartphone, a tablet, a laptop, or a smartwatch. Managing the parcel box 120 may include, amongst others, adjusting the settings of the parcel box 120 and sending messages to computing device 240. For example, computing device 240 may be used to register the location of the parcel box 120 and to receive a push notification that informs the owner of the parcel box that a parcel has been delivered or picked-up.

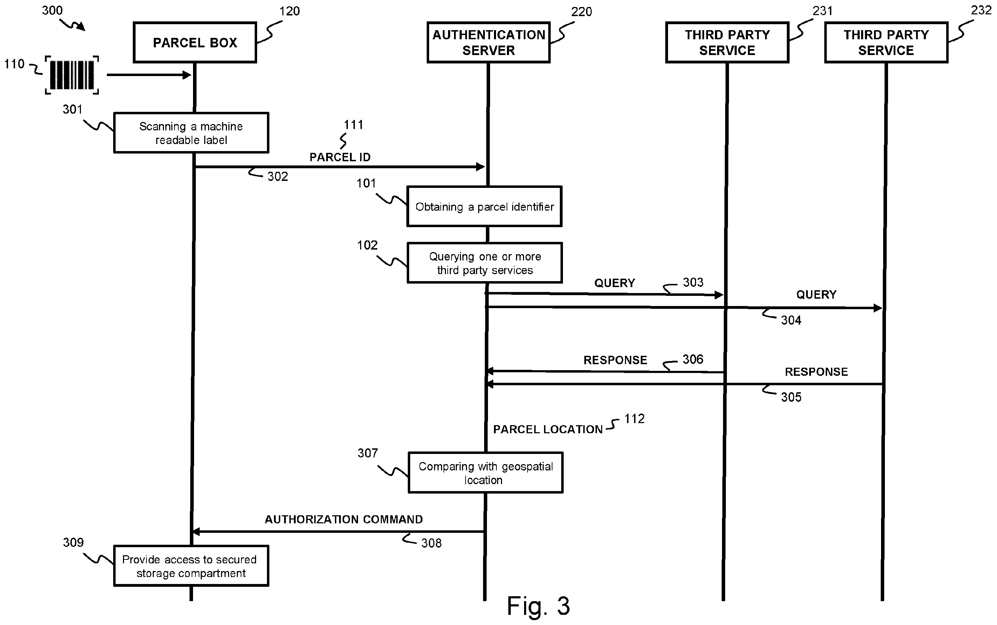

Fig. 3 shows a sequence diagram 300 illustrating the digital communication between devices 120, 220, 231, 232 for controlling access to a parcel box 120 according to embodiments. Authentication server 220 obtains a parcel identifier 111, e.g. through a MQTT or HTTP message 302 transmitted by parcel box 120. The parcel identifier 111 is obtained by scanning 301 a machine-readable label 110 as described in relation to Fig. 1 and Fig. 2. After obtaining 101 the parcel identifier 111 from parcel box 120, the authentication server 220 performs the querying 102 of the third party services 231, 232 by sending one or more queries 303, 304. The queries 303, 304 may be respective requests for parcel information related to the parcel identifier 111. In response 305, 306 to queries 303, 304, the respective third party services 231, 232 return the location of the parcel 112 associated with the parcel identifier 111. Thereafter, the authentication server 220 may be configured to send an authorization command 308 to parcel box 120. The authorization command 308 may instruct parcel box 120 to grant access to the secured storage compartment if the parcel location matches the location of the parcel box. Else, the authorization command 308 may instruct parcel box 120 to refuse access to the secured storage compartment. Alternatively, no authorization command 308 is send when access is refused. The parcel box 120 may further comprise an electronic lock configured to provide 309 access to the secured storage compartment based on the authorization command 308. In other words, if access is granted by authentication server 220, the authorization command 308 may instruct parcel box 120 to unlock an electronic lock.

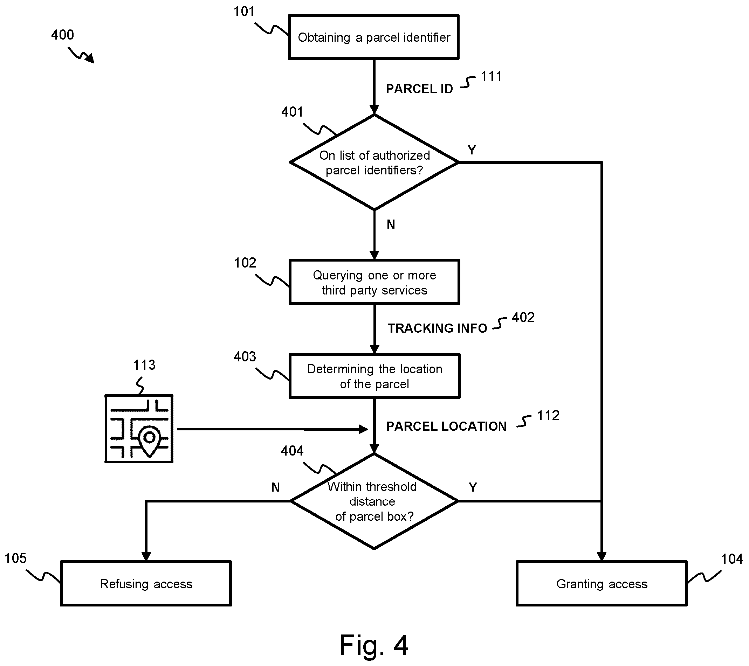

Fig. 4 shows further steps 400 according to a computer-implemented method for controlling access to a parcel box according to embodiments. In step 401, a list of authorized parcel identifiers may be checked after obtaining a parcel identifier 111 as described above in relation to Figs. 1 - 3. In other words, the computer-implemented method may further comprise determining whether parcel identifier 111 is included in a list of authorized parcel identifiers in step 401. The list of authorized parcel identifiers may include any parcel identifier associated with an expected parcel. An expected parcel is a parcel that is expected to be delivered at the parcel box, or a parcel that is expected to be picked-up from the parcel box. The list of authorized parcel identifiers may be stored locally, e.g. in a local memory of the parcel box, and/or remotely, e.g. in cloud storage.

Adding a parcel identifier associated with an expected parcel to the list of authorized parcel identifiers may be performed by means of a computing device, e.g. device 240 in Fig. 2. This can be achieved by a software application or a web application. For example, a user of the computing device may input a tracking number of an ordered parcel in a software application running on the computing device. The computing device may thereby provide the parcel identifier of the expected parcel to the authentication server, e.g. 220 in Fig. 2, which may store it in memory and/or may forward it to the parcel box to be stored locally. The parcel identifier may further be an identifier generated by the owner of the parcel box, i.e. a self-generated identifier. Such a self-generated identifier may also be added to the list of authorized parcel identifiers. In doing so, access to the parcel box can be provided to anyone with an authorized parcel identifier, e.g. in the form of a QR code. This further allows using the parcel box to transfer items that typically have no barcode or QR associated to them, e.g. a housekey, medical samples, a borrowed item, or a second hand item bought on an online marketplace.

Alternatively or complementary, adding a parcel identifier to the list of authorized parcel identifiers may comprise receiving a tracking email and retrieving the parcel identifier therefrom. A tracking email is typically received by the intended recipient of a parcel when the parcel is handed over to a parcel carrier by the sender. A tracking email may also be received by a sender of a parcel when offering the parcel to a parcel carrier, i.e. upon requesting the parcel carrier to pick-up the parcel and deliver it to an intended recipient. Such a tracking email may thus be send to the authentication server, e.g. 220 in Fig. 2, to add a parcel identifier to the list. This may, for example, be achieved by forwarding the tracking email to an email address associated with the parcel box. Alternatively, the tracking email may directly be send to the email address associated with the parcel box, e.g. by providing said email address to the parcel carrier. The authentication server may further be configured to retrieve the parcel identifier from the tracking email by means of natural language processing. It will be apparent that natural language processing may refer here to any computer program, algorithm, or software that allows to process and analyse natural language data.

If the parcel identifier 111 is included in the list of authorized parcel identifiers in step 401, the computer-implemented method may continue to step 104 by granting access to the secured storage compartment of the parcel box. This further allows granting access 104 to the secured storage compartment based on parcel identifiers that are not generated or managed by a courier, e.g. based on a QR code generated by the owner of the parcel box. This has the further advantage that the parcel box can be used to securely transfer objects, e.g. a physical key of a residence or blood samples, between authorized users of the parcel box.

If the parcel identifier 111 is not included in the list of authorized identifiers in step 401, the computer-implemented method may continue to step 102, i.e. the querying of third party services. Alternatively, the querying 102 and the subsequent steps 403, 404 may be performed even if the parcel identifier is included in the list, e.g. to verify the authorization. This can increase the security of the access control.

The querying in step 102 may further comprise obtaining tracking information 402 associated with the parcel identifier 111. In other words, instead of returning the location of the parcel 112, the queried third party services may return tracking information 402. The tracking information 402 may be obtained in stead of the location of the parcel, or in addition to the location of the parcel. Tracking information 402 may include, amongst others, a tracking number, a name of a sender, a name of a recipient, an address of the sender, an address of the recipient, a sender reference, a courier reference, and a time in transit. In doing so, additional information on the parcel can be obtained. In a next step 404, the location of the parcel 112 may then be determined from the tracking information.

In a following step 404, the location of the parcel 112 may be compared with the location of the parcel box 113. Access to the parcel box may be granted in step 104 if the location of the parcel 112 is within a configurable threshold distance from the location of the parcel box. In other words, locations 112, 113 may differ from each other by at most the configurable threshold distance. This allows setting a safety margin or a margin of error for granting access to the secured storage compartment of the parcel box. This can avoid that access to the secured storage compartment is refused in step 105 if the location of the parcel box 113 or the location of the parcel 112 comprises a relatively small error, e.g. a mistake in the house number of an address. This has the further advantage that the computer-implemented method is more robust and avoids undue burden to receive or send parcels due to a failed delivery or pick-up. The configurable threshold distance may be provisioned and/or adjusted by the owner of the parcel box, e.g. by managing the parcel box through computing device 240 in Fig. 2.

The computer-implemented method may further comprise geocoding an address to spatial coordinates. In other words, an address associated with the location of the parcel 112 and/or the location of the parcel box 113 may be converted to spatial coordinates. This allows obtaining the spatial coordinates of the location of the parcel box 113 and/or the location of the parcel 112 if only the respective address is known or provided, e.g. if the location of the parcel box 113 is provided as an address during installation of the parcel box. This guarantees that the location of the parcel 112 can be compared with the location of the parcel box 113 even if they are provided in different formats.

Alternatively or complementary, the computer-implemented method may comprise reverse geocoding spatial coordinates to an address. In other words, spatial coordinates associated with the location of the parcel 112 and/or the location of the parcel box 113 may be converted to an address. This allows obtaining the address of the location of the parcel box 113 and/or the location of the parcel 112 if only the respective spatial coordinates are known or provided.

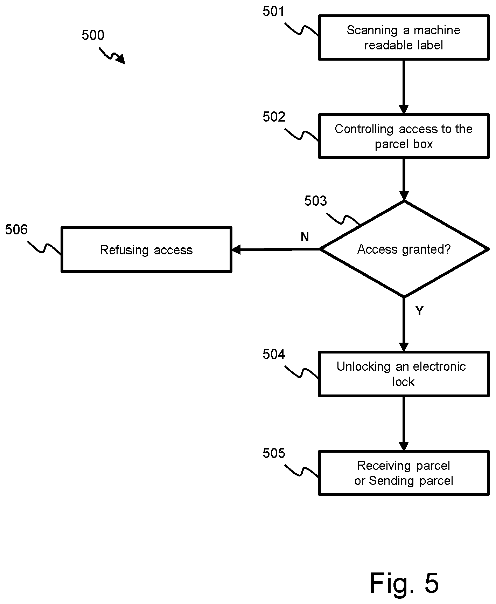

Fig. 5 shows steps of a method for receiving a parcel at a parcel box and for sending a parcel from the parcel box according to example aspects. In a first step 501, a machine-readable label is scanned. The machine-readable label may, for example, be a barcode attached to a parcel when delivering the parcel to the parcel box. The machine-readable label may, for example, be a barcode displayed on a screen of a mobile device or printed on a sheet of paper when picking up a parcel from the parcel box, i.e. when sending a parcel from the parcel box.

In a next step 502, access to the parcel box is controlled based on the scanned machine-readable label by executing the computer-implemented method for controlling access to the parcel box, e.g. steps 100 or 400 as described in relation to Fig. 1 or Fig. 4 respectively. If access is refused by the computer-implemented method in step 502, the method 500 terminates with step 506. If access is granted by the computer-implemented method in step 502, the method may proceed to step 504. In step 504, access may be provided to the secured storage compartment of the parcel box by unlocking an electronic lock.

In a final step 505, if the scanned machine-readable label is associated with a parcel to be delivered, the parcel may be received at the parcel box by placing the parcel within the secured storage compartment. In other words, the parcel is placed inside the secured storage compartment, e.g. by a parcel carrier. Alternatively, if the scanned machine-readable label is associated with a parcel to be picked-up, the parcel may be send in step 505 by removing the parcel from the secured storage compartment.

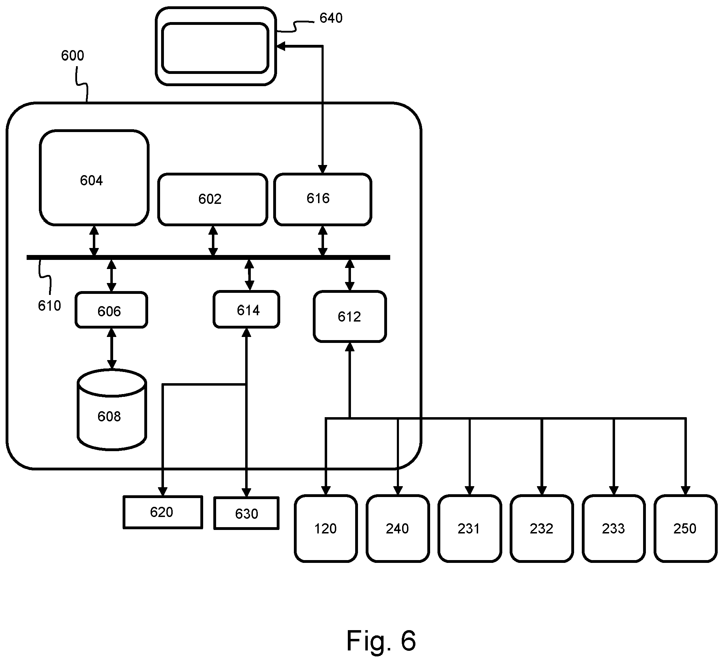

Fig. 6 shows a suitable computing system 600 enabling to implement embodiments of the above described method according to the invention. Computing system 600 may in general be formed as a suitable general-purpose computer and comprise a bus 610, a processor 602, a local memory 604, one or more optional input interfaces 614, one or more optional output interfaces 616, a communication interface 612, a storage element interface 606, and one or more storage elements 608. Bus 610 may comprise one or more conductors that permit communication among the components of the computing system 600. Processor 602 may include any type of conventional processor or microprocessor that interprets and executes programming instructions. Local memory 604 may include a random-access memory (RAM) or another type of dynamic storage device that stores information and instructions for execution by processor 602 and/or a read only memory (ROM) or another type of static storage device that stores static information and instructions for use by processor 602. Input interface 614 may comprise one or more conventional mechanisms that permit an operator or user to input information to the computing device 600, such as a keyboard 620, a mouse 630, a pen, voice recognition and/or biometric mechanisms, a camera, etc. Output interface 616 may comprise one or more conventional mechanisms that output information to the operator or user, such as a display 640, etc. Communication interface 612 may comprise any transceiver-like mechanism such as for example one or more Ethernet interfaces that enables computing system 600 to communicate with other devices and/or systems such as for example, amongst others, parcel box 120, computing device 240, one or more third party services 231, 232, 233, or home automation system 250. The communication interface 612 of computing system 600 may be connected to such another computing system by means of a local area network (LAN) or a wide area network (WAN) such as for example the internet. Storage element interface 606 may comprise a storage interface such as for example a Serial Advanced Technology Attachment (SATA) interface or a Small Computer System Interface (SCSI) for connecting bus 610 to one or more storage elements 608, such as one or more local disks, for example SATA disk drives, and control the reading and writing of data to and/or from these storage elements 608. Although the storage element(s) 608 above is/are described as a local disk, in general any other suitable computer-readable media such as a removable magnetic disk, optical storage media such as a CD or DVD, -ROM disk, solid state drives, flash memory cards, etc. could be used.

Although the present invention has been illustrated by reference to specific embodiments, it will be apparent to those skilled in the art that the invention is not limited to the details of the foregoing illustrative embodiments. The invention is limited by the appended claims. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A computer-implemented method for controlling access to a parcel box (120) comprising a secured storage compartment (121) for storing parcels, and further comprising a scanner (122) for scanning machine-readable labels (110); the computer-implemented method comprising:
- obtaining (101), from the parcel box, a parcel identifier (111) further obtained by scanning a machine-readable label (110) associated with a parcel by means of the scanner;
- querying (102) one or more third party services for a location of the parcel (112) associated with the parcel identifier; and
- if the location of the parcel matches a location of the parcel box (113), granting (104) access to the secured storage compartment of the parcel box.

2. The computer-implemented method according to claim 1, wherein the location of the parcel (112) comprises a delivery location indicative for a location where the parcel is to be delivered, or a pick-up location indicative for a location where the parcel is to be picked up from.

3. The computer-implemented method according to any of the preceding claims, further comprising granting (104) access to the secured storage compartment of the parcel box if (404) the location of the parcel is within a configurable threshold distance from the location of the parcel box.

4. The computer-implemented method according to any of the preceding claims, wherein the location of the parcel (112), and the location of the parcel box (113) are **characterized by** respective addresses and/or respective spatial coordinates.

5. The computer-implemented method according to claim 4, further comprising geocoding at least one respective address to spatial coordinates.

6. The computer-implemented method according to any of the preceding claims, further comprising determining the location of the parcel box (113) by means of a global navigation satellite system.

7. The computer-implemented method according to any of the preceding claims, wherein the querying (102) comprises querying a plurality of third party services (231, 232, 233) for a location of the parcel (112) at substantially the same time.

8. The computer-implemented method according to any of the preceding claims, wherein the querying (102) further comprises obtaining, from the one or more third party services (231, 232, 233), tracking information (402) associated with the parcel identifier (111); and determining (403) the location of the parcel (112) from the tracking information.

9. The computer-implemented method according to any of the preceding claims, wherein obtaining the parcel identifier from the parcel box comprises receiving (201) a message structured according to a message queuing telemetry transport, MQTT, protocol or a hypertext transfer protocol, HTTP.

10. The computer-implemented method according to any of the preceding claims, further comprising adding a parcel identifier associated with an expected parcel to a list of authorized parcel identifiers; and granting (104) access to the secured storage compartment of the parcel box if (401) the obtained parcel identifier matches a parcel identifier on the list of authorized parcel identifiers.

11. The computer-implemented method according to claim 10, wherein adding the parcel identifier to a list of authorized parcel identifiers comprises receiving a tracking email that includes the parcel identifier; and retrieving the parcel identifier from the received tracking email by means of natural language processing.

12. The computer-implemented method according to any of the preceding claims, further comprising exchanging (206, 207) data indicative for the controlling of access to the parcel box with a home automation system (250).

13. A method for receiving a parcel at a parcel box (120) comprising a secured storage compartment (121) for storing parcels, and further comprising a scanner (122) for scanning machine-readable labels (110); the method comprising:
- by the scanner (122), scanning (501) a machine-readable label associated with a parcel to obtain a parcel identifier;
- by an authentication server (220), controlling (502) access to the parcel box according to any one of claims 1 to 12;
- if access is granted by the authentication server, unlocking (504) an electronic lock to provide access to the secured storage compartment; and
- receiving (505) the parcel by delivering the parcel within the secured storage compartment.

14. A method for sending a parcel from a parcel box (120) comprising a secured storage compartment (121) for storing parcels, and further comprising a scanner (122) for scanning machine-readable labels; the method comprising:
- by the scanner (122), scanning (501) a machine-readable label associated with a parcel to obtain a parcel identifier;
- by an authentication server (220), controlling (502) access to the parcel box according to any one of claims 1 to 12;
- if access is granted by the authentication server, unlocking (504) an electronic lock to provide access to the secured storage compartment; and
- sending (505) the parcel by removing the parcel from the secured storage compartment.

15. A parcel box (120) for receiving and sending parcels, comprising:
- a secured storage compartment (121) configured to store parcels;
- a scanner (122) configured to scan a machine-readable label (110) associated with a parcel (210) to obtain a parcel identifier;
- a control unit configured to provide the parcel identifier to an authentication server (220) configured to control access to the parcel box according to any one of claims 1 to 12; and
- an electronic lock configured to provide access to the secured storage compartment (121) if access is granted by the authentication server.

## Patentansprüche

1. Computerimplementiertes Verfahren zum Steuern des Zugangs zu einer Paketbox (120), umfassend ein gesichertes Aufbewahrungsfach (121) zum Aufbewahren von Paketen und ferner umfassend einen Scanner (122) zum Scannen maschinenlesbarer Etiketten (110); wobei das computerimplementierte Verfahren Folgendes umfasst:
- Erhalten (101) einer Paketkennung (111) aus der Paketbox, die ferner durch Scannen eines maschinenlesbaren Etiketts (110), das einem Paket zugeordnet ist, mittels des Scanners erhalten wird;
- Abfragen (102) eines oder mehrerer Drittanbieterdienste nach einem Ort des Pakets (112), das der Paketkennung zugeordnet ist; und
- wenn der Ort des Pakets mit einem Ort der Paketbox (113) übereinstimmt, Gewähren (104) von Zugang zu dem gesicherten Aufbewahrungsfach der Paketboxs.

2. Computerimplementiertes Verfahren nach Anspruch 1, wobei der Ort des Pakets (112) einen Lieferort, der einen Ort angibt, an den das Paket geliefert werden soll, oder einen Abholort, der einen Ort angibt, an dem das Paket abgeholt werden soll, umfasst.

3. Computerimplementiertes Verfahren nach einem der vorhergehenden Ansprüche, ferner umfassend Gewähren (104) von Zugang zu dem gesicherten Aufbewahrungsfach der Paketbox, wenn (404) der Ort des Pakets innerhalb einer konfigurierbaren Schwellenentfernung von dem Ort der Paketbox ist.

4. Computerimplementiertes Verfahren nach einem der vorhergehenden Ansprüche, wobei der Ort des Pakets (112) und der Ort der Paketbox (113) durch jeweilige Adressen und/oder jeweilige Raumkoordinaten gekennzeichnet sind.

5. Computerimplementiertes Verfahren nach Anspruch 4, ferner umfassend Geokodieren mindestens einer jeweiligen Adresse in Raumkoordinaten.

6. Computerimplementiertes Verfahren nach einem der vorhergehenden Ansprüche, ferner umfassend Bestimmen des Orts der Paketbox (113) mittels eines globalen Satellitennavigationssystems.

7. Computerimplementiertes Verfahren nach einem der vorhergehenden Ansprüche, wobei das Abfragen (102) im Wesentlichen gleichzeitiges Abfragen einer Vielzahl von Drittanbieterdiensten (231, 232, 233) nach einem Ort des Pakets (112) umfasst.

8. Computerimplementiertes Verfahren nach einem der vorhergehenden Ansprüche, wobei das Abfragen (102) ferner Erhalten von Verfolgungsinformationen (402), die der Paketkennung (111) zugeordnet sind, von dem einen oder den mehreren Drittanbieterdiensten (231, 232, 233); und Bestimmen (403) des Orts des Pakets (112) anhand der Verfolgungsinformationen umfasst.

9. Computerimplementiertes Verfahren nach einem der vorhergehenden Ansprüche, wobei das Erhalten der Paketkennung aus der Paketbox Empfangen (201) einer Nachricht, die gemäß einem Message-Queuing-Telemetry-Transport-Protokoll, MQTT-Protokoll, oder einem Hypertext Transfer Protocol, HTTP, strukturiert ist, umfasst.

10. Computerimplementiertes Verfahren nach einem der vorhergehenden Ansprüche, ferner umfassend Hinzufügen einer Paketkennung, die einem erwarteten Paket zugeordnet ist, zu einer Liste von autorisierten Paketkennungen; und Gewähren (104) von Zugang zu dem gesicherten Aufbewahrungsfach der Paketbox, wenn (401) die erhaltene Paketkennung mit einer Paketkennung auf der Liste von autorisierten Paketkennungen übereinstimmt.

11. Computerimplementiertes Verfahren nach Anspruch 10, wobei das Hinzufügen der Paketkennung zu einer Liste von autorisierten Paketkennungen Empfangen einer Verfolgungs-E-Mail, die die Paketkennung beinhaltet; und Abrufen der Paketkennung aus der empfangenen Verfolgungs-E-Mail mittels Verarbeitung in natürlicher Sprache umfasst.

12. Computerimplementiertes Verfahren nach einem der vorhergehenden Ansprüche, ferner umfassend Austauschen (206, 207) von Daten, die die Steuerung des Zugangs zu der Paketbox angeben, mit einem Heimautomatisierungssystem (250).

13. Verfahren zum Empfangen eines Pakets an einer Paketbox (120), umfassend ein gesichertes Aufbewahrungsfach (121) zum Aufbewahren von Paketen und ferner umfassend einen Scanner (122) zum Scannen maschinenlesbarer Etiketten (110); wobei das Verfahren Folgendes umfasst:
- Scannen (501) eines maschinenlesbaren Etiketts, das einem Paket zugeordnet ist, durch den Scanner (122), um eine Paketkennung zu erhalten;
- Steuern (502) des Zugangs zu der Paketbox nach einem der Ansprüche 1 bis 12 durch einen Authentifizierungsserver (220);
- wenn der Zugang durch den Authentifizierungsserver gewährt wird, Entriegeln (504) eines elektronischen Schlosses, um einen Zugang zu dem gesicherten Aufbewahrungsfach bereitzustellen; und
- Empfangen (505) des Pakets durch Liefern des Pakets innerhalb des gesicherten Aufbewahrungsfachs.

14. Verfahren zum Verschicken eines Pakets aus einer Paketbox (120), umfassend ein gesichertes Aufbewahrungsfach (121) zum Aufbewahren von Paketen und ferner umfassend einen Scanner (122) zum Scannen maschinenlesbarer Etiketten; wobei das Verfahren Folgendes umfasst:
- Scannen (501) eines maschinenlesbaren Etiketts, das einem Paket zugeordnet ist, durch den Scanner (122), um eine Paketkennung zu erhalten;
- Steuern (502) des Zugangs zu der Paketbox nach einem der Ansprüche 1 bis 12 durch einen Authentifizierungsserver (220);
- wenn der Zugang durch den Authentifizierungsserver gewährt wird, Entriegeln (504) eines elektronischen Schlosses, um einen Zugang zu dem gesicherten Aufbewahrungsfach bereitzustellen; und
- Verschicken (505) des Pakets durch Entfernen des Pakets aus dem gesicherten Aufbewahrungsfach.

15. Paketbox (120) zum Empfangen und Verschicken von Paketen, umfassend:
- ein gesichertes Aufbewahrungsfach (121), das dazu konfiguriert ist, Pakete aufzubewahren;
- einen Scanner (122), der dazu konfiguriert ist, ein maschinenlesbares Etikett (110), das einem Paket (210) zugeordnet ist, zu scannen, um eine Paketkennung zu erhalten;
- eine Steuereinheit, die dazu konfiguriert ist, die Paketkennung einem Authentifizierungsserver (220) bereitzustellen, der dazu konfiguriert ist, den Zugang zu der Paketbox nach einem der Ansprüche 1 bis 12 zu steuern; und
- ein elektronisches Schloss, das dazu konfiguriert ist, Zugang zu dem gesicherten Aufbewahrungsfach (121) bereitzustellen, wenn der Zugang durch den Authentifizierungsserver gewährt wird.

## Revendications

1. Procédé mis en œuvre par ordinateur pour contrôler l'accès à une boîte de colis (120) comprenant un compartiment de stockage sécurisé (121) pour stocker des colis, et comprenant en outre un scanner (122) pour scanner des étiquettes lisibles par machine (110) ; le procédé mis en œuvre par ordinateur comprenant :
- l'obtention (101), à partir de la boîte de colis, d'un identifiant de colis (111) obtenu en outre en scannant une étiquette lisible par machine (110) associée à un colis au moyen du scanner ;
- l'interrogation (102) d'un ou de plusieurs services tiers pour un emplacement du colis (112) associé à l'identifiant de colis ; et
- si l'emplacement du colis correspond à un emplacement de la boîte de colis (113), l'octroi (104) de l'accès au compartiment de stockage sécurisé de la boîte de colis.

2. Procédé mis en œuvre par ordinateur selon la revendication 1, dans lequel l'emplacement du colis (112) comprend un emplacement de livraison indiquant un emplacement où le colis doit être livré, ou un emplacement de ramassage indiquant un emplacement où le colis doit être ramassé.

3. Procédé mis en œuvre par ordinateur selon l'une quelconque des revendications précédentes, comprenant en outre l'octroi (104) d'un accès au compartiment de stockage sécurisé de la boîte de colis si (404) l'emplacement du colis est dans les limites d'une distance de seuil configurable de l'emplacement de la boîte de colis.

4. Procédé mis en œuvre par ordinateur selon l'une quelconque des revendications précédentes, dans lequel l'emplacement du colis (112) et l'emplacement de la boîte de colis (113) sont **caractérisés par** des adresses respectives et/ou des coordonnées spatiales respectives.

5. Procédé mis en œuvre par ordinateur selon la revendication 4, comprenant en outre le géocodage d'au moins une adresse respective en coordonnées spatiales.

6. Procédé mis en œuvre par ordinateur selon l'une quelconque des revendications précédentes, comprenant en outre la détermination de l'emplacement de la boîte de colis (113) au moyen d'un système mondial de navigation par satellite.

7. Procédé mis en œuvre par ordinateur selon l'une quelconque des revendications précédentes, dans lequel l'interrogation (102) comprend l'interrogation d'une pluralité de services tiers (231, 232, 233) pour un emplacement du colis (112) sensiblement au même moment.

8. Procédé mis en œuvre par ordinateur selon l'une quelconque des revendications précédentes, dans lequel l'interrogation (102) comprend en outre l'obtention, à partir des un ou plusieurs services tiers (231, 232, 233), d'informations de suivi (402) associées à l'identifiant de colis (111) ; et la détermination (403) de l'emplacement du colis (112) à partir des informations de suivi.

9. Procédé mis en œuvre par ordinateur selon l'une quelconque des revendications précédentes, dans lequel l'obtention de l'identifiant de colis à partir de la boîte de colis comprend la réception (201) d'un message structuré selon un protocole de transport de télémétrie de mise en file d'attente de message, MQTT, ou un protocole de transfert hypertexte, HTTP.

10. Procédé mis en œuvre par ordinateur selon l'une quelconque des revendications précédentes, comprenant en outre l'ajout d'un identifiant de colis associé à un colis attendu à une liste d'identifiants de colis autorisés ; et l'octroi (104) d'un accès au compartiment de stockage sécurisé de la boîte de colis si (401) l'identifiant de colis obtenu correspond à un identifiant de colis sur la liste d'identifiants de colis autorisés.

11. Procédé mis en œuvre par ordinateur selon la revendication 10, dans lequel l'ajout de l'identifiant de colis à une liste d'identifiants de colis autorisés comprend la réception d'un courrier électronique de suivi qui comprend l'identifiant de colis ; et la récupération de l'identifiant de colis à partir du courrier électronique de suivi reçu au moyen de traitement du langage naturel.

12. Procédé mis en œuvre par ordinateur selon l'une quelconque des revendications précédentes, comprenant en outre l'échange (206, 207) de données d'indication pour le contrôle d'accès à la boîte de colis avec un système domotique (250).

13. Procédé pour recevoir un colis au niveau d'une boîte de colis (120) comprenant un compartiment de stockage sécurisé (121) pour stocker des colis, et comprenant en outre un scanner (122) pour scanner des étiquettes lisibles par machine (110) ; le procédé comprenant :
- par le scanner (122), le scan (501) d'une étiquette lisible par machine associée à un colis pour obtenir un identifiant de colis ;
- par un serveur d'authentification (220), le contrôle (502) d'accès à la boîte de colis selon l'une quelconque des revendications 1 à 12 ;
- si l'accès est octroyé par le serveur d'authentification, le déverrouillage (504) d'une serrure électronique pour assurer l'accès au compartiment de stockage sécurisé ; et
- la réception (505) du colis en livrant le colis au sein du compartiment de stockage sécurisé.

14. Procédé pour envoyer un colis à partir d'une boîte de colis (120) comprenant un compartiment de stockage sécurisé (121) pour stocker des colis, et comprenant en outre un scanner (122) pour scanner des étiquettes lisibles par machine ; le procédé comprenant :
- par le scanner (122), le scan (501) d'une étiquette lisible par machine associée à un colis pour obtenir un identifiant de colis ;
- par un serveur d'authentification (220), le contrôle (502) d'accès à la boîte de colis selon l'une quelconque des revendications 1 à 12 ;
- si l'accès est octroyé par le serveur d'authentification, le déverrouillage (504) d'une serrure électronique pour assurer l'accès au compartiment de stockage sécurisé ; et
- l'envoi (505) du colis en retirant le colis du compartiment de stockage sécurisé.

15. Boîte de colis (120) pour recevoir et envoyer des colis, comprenant :
- un compartiment de stockage sécurisé (121) configuré pour stocker des colis ;
- un scanner (122) configuré pour scanner une étiquette lisible par machine (110) associée à un colis (210) pour obtenir un identifiant de colis ;
- une unité de contrôle configurée pour fournir l'identifiant de colis à un serveur d'authentification (220) configuré pour contrôler l'accès à la boîte de colis selon l'une quelconque des revendications 1 à 12 ; et
- une serrure électronique configurée pour assurer l'accès au compartiment de stockage sécurisé (121) si l'accès est octroyé par le serveur d'authentification.
